# EUROPEAN PATENT APPLICATION

(11) **EP 1 085 528 A2**
(43) Date of publication of application: **21.03.2001**
(21) Application number: 00830614.4
(22) Date of filing: 12.09.2000
(51) Int. Cl.: G21K 1/06

(54) **Method to manufacture X ray mirrors with thin film multilayer structures by replication technique**

(30) Priority: 16.09.1999 IT RM990573
(71) Applicant: CE.TE.V. CENTRO TECNOLOGIE DEL VUOTO, 67061 Carsoli (AQ) (IT); OSSERVATORIO ASTRONOMICO DI BRERA, 22055 Merate (LC) (IT)
(72) Inventor: Misiano, Carlo, 00161 Roma (IT); Citterio, Oberto, 220441 Inverigo (CO) (IT)

(57) **Abstract**

Method to realize reflecting structures for X rays both acting at grazing incidence angle and normal incidence, using replication technique. The invention lies in the optical scientific field and can find application in the field of manufacturing optical instruments, particularly telescopes for satellite astronomy. The final product is a telescope composed by many truncated cone structures , coaxial and of very fine optical finish and micro-roughness. The multiplayer structure is composed by a high number of alternate films, more than 200, for ex. nickel and carbon of a very thin thickness. The advantage consists both in lower costs and in obtaining good finish reflecting surfaces.

## Description

The invention relates to a method for obtaining reflecting structure for X rays, both acting at grazing incidence angle or normal incidence, utilizing replication technique.

As known, "replication" means, in the field of thin films, those processes in which the thin film, generally metallic, is firstly deposited on an optical finished mold, previously covered with a releasing layer. The film is then glued to its final mechanical support (not optically finished) and released from the mold. In this way, reflecting surfaces of good finish and low costs are obtained, even in presence of complex and aspheric surfaces.

The invention has been conceived for the necessity to obtain multilayers reflecting structures, consisting of up to 150 to 200 layers, in mirrors for X rays at grazing incidence angle and normal incidence, as parts of telescopes for satellite astronomy.

The invention lies in the technical field of optics and finds its application in the field of manufacturing optical instruments, particularly for telescopes for X and XUV astronomy.

The final product is a telescope composed by many coaxial truncated cone structures, with very good optical finish and micro-roughness, even lower than 2 Å RMS on the inner surface of which a multilayer thin film is deposited, with the goal by increasing the reflectivity, to improve the quality of the image and the working range of the telescope. This structure composed by many alternating layers, even more than 200, for instance nickel and carbon, of a very thin thickness: 15 to 30 Å. The problem in realizing this kind of multilayer treatment able to satisfy the mirror specifications, concerned specifically micro-roughness which has to be at the same level of the substrate, coating continuity thickness uniformity, and the fact that the film has to be deposited on the inner surface of the truncated cone substrates of diameter even less than 20 cm.

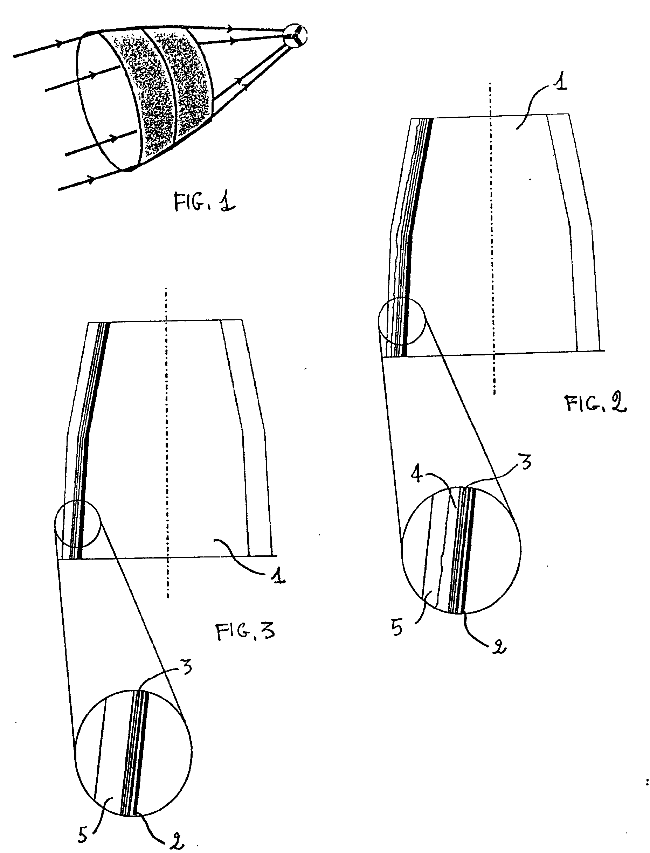

As known, a telescope for X rays acting at grazing incidence angle comprises a series of mirrors shaped as truncated cone or more complex structure (Fig. 1), whose reflecting surface is the internal one. The whole telescope comprises *n* mirrors with different diameter, coaxially assembled.

In the simplest structures, the internal surface of the mirror is simply covered by a golden film or other high-density materials, which for their own characteristics present a high reflection efficiency for X rays. The limit grazing incidence angle with which one can work, can be improved utilizing the Bragg interference phenomenon of a multilayer. In this manner the efficiency of the optics at high energy can be significantly widened introducing an alternate multilayer structure at high and low density, for example nickel and carbon of thin thickness like tens of Å, but well controlled in thickness, uniformity and surface micro-roughness.

As for the traditional techniques, the realization of the multiplayer treatment was effected deposing films directly in the internal part of the truncated cone structures utilizing plasma sputtering sources specifically made and such as to be inserted in the inner part of the truncated cone structure. The limits of this solution lied both in the not good quality of the deposed films obtainable by the plasma sputtering source and in the difficulty to realize superficial finishes in the internal face of the truncated cone structure, also because of the conditioning due to the choice of materials.

The invention presented provides the realization of a negative mold of the truncated cone element, known with the expression "mandrel". The mandrel can be manufactured with materials easily to work, at a low roughness level such as fused silica, nickel, or better, nickel superficially treated with a titanium nitride so as to reach a requested level of roughness lower than 2Å RMS. The multilayer structure, inclusive of the releasing coating, for ex. gold, is deposited on the external surface of the mandrel, using "Ion Beam Sputtering Deposition" technique, which results of difficult applicability to the treatment on internal surfaces of the truncated cone structures having a small diameter.

Now, the mechanical support of the mirror, made of nickel or ceramic material, like silicon carbide, alumina, or silicon oxide, is assembled with the multilayer structure by gluing, with suitable high stability resin or directly grown by means of an electrolytic process, or deposited by a process such as plasma spray.

The mandrel then is cooled using liquid nitrogen and its consequent shrinking causes the separation of the reflecting multilayer from the releasing film which so remains on the mold surface. In the same way, it is possible to manufacture plane mirrors, even those operating at not grazing incidence angle, and in this case, the support matrix is not constituted by a mold but a plane structure.

The advantages of the inventions lies in the better quality of the allowable film which can be deposited by "Ion Beam Sputtering Deposition", in the easier realization of a treatment continuous and uniform on an external surface, and in a simpler optical manufacture on a massive mold respect to a light structure, not rigid, shaped as a truncated cone and internal. Finally, the invention allows to produce, with a single optically finished mandrel, the desired number elements of the same type. In the following the invention is described for an illustrative and not limitative purpose, with reference to the attached drawings, based on the version actually preferred by the inventors.
Fig. 1 Mirror for a X rays telescope in truncated cone configuration.
Fig. 2 Mandrel with the releasing film deposited, of the reflecting multiplayer structure, with the support directly increased (in loco) in the same place, on the multiplayer structure with adhesive.
Fig. 3 Mandrel with detaching deposited film , of the reflecting multilayer structure and with the support directly grown (in loco) in the same place on the multilayer structure, without adhesive.

In these drawings the following parts can be seen:
- 1: mandrel
- 2: releasing layer
- 3: reflecting multilayer
- 4: adhesive
- 5: support

The mandrel is realized with the best techniques of surface finishing works. To obtain the best result, in the invention presented, the mandrel has a nickel surface, optically finished, on which a titanium nitride film deposed under vacuum by a Ion Plating method plasma assisted, or something similar which with its hardness allows a perfect optical finishing to a roughness of 1,5 Å RMS.

In conclusion, the described product is obtained by the process a follows:
- a mold of the truncated cone element, the mandrel, is made, whose external surface is shaped as the internal part of the truncated cone structure which will by grown around it, treated in such a way to have a very fine surface finishing and low roughness even lower than 1,5 Å RMS;
- on the mold surface, properly rotating will be deposed: a detaching film preferably gold;
   multilayer structure with alternate layers with high and low density, preferably nickel or carbon, being the multilayer structure generally composed by more than one hundred layers, with constant or variable space depending on the optical specifications of the mirror;
   a support of the reflecting structure, realized so as to match the mandrel shape with a good approximation, is attached with proper adhesive out of the multilayer structure; being this support metallic, like nickel or ceramic like alumina AL₂O₃ or silicon carbide ; the mold is cooled so that its shrinks and the mirror detaches from it while gold remains entirely on the mandrel.

This method has been well experimented by the inventor. Particularly important is the fact that this replication method does not chose on the final mirror surface any alteration of the surface roughness respect to the initial roughness of the mold.

## Claims

1. Method to manufacture, by replication, mirrors for X rays with thin films multilayer structure, characterized by the use of a mold support, named "mandrel", optically finished, on which an under vacuum multilayer structure is deposed, being this structure composed by a detaching film and a reflecting multilayer for X rays, the coupling of the multilayer structure by direct attaching or growing of the support and by the detaching of the reflecting multilayer structure thanks to the shrinking of the mandrel caused by cooling.

2. Method, as for Claim 1, in which said mandrel is optically finished to superficial roughness levels very low, even less than 2 Å RMS, being said mandrel constituted by a material like merged silica, nickel superficially covered by a hard film like titanium nitrate.

3. Method, as for Claim 1, in which the multilayer structure is realized by a Ion Beam Sputtering Deposition", using in particular gold as detaching material and nickel and carbon as alternate layers for the reflecting structure.

4. Method, as for claim 1, in which the mechanical support is assembled to the multilayer structure by proper high stability adhesive, being the support metallic, nickel, or ceramic like silica, alumina, silica oxide.

5. Method, as for Claim 1, where the mechanical support is coupled to the multiplayer structure by electrolytic growth of, for example, nickel.

6. Method, as for Claim 1 in which the mechanical support is directly deposited on the multiplayer structure by plasma spray, being this support so realized constituted by alumina or silica oxide.

7. Method, as for Claim 1, in which the support is constituted by a proper mold to realize a mirror plane or other configuration.

8. Method, as for Claim 7, in which the multiplayer reflecting structure is optimized for X ray with grazing incidence angle, or not grazing.

9. Process to realize reflecting structure for X rays, both working at grazing incidence angle and normal incidence, utilizing the replication technique, with or without adhesive, consisting of the following realization phases:
. manufacturing of a negative mold of the truncated cone element, mandrel, or other shape, where the external surface is configured as the internal part of the truncated cone structure, or other shape, which will be grown around, worked so as to have a very good surface finish and low roughness, lower than 1,5 Å RMS;
. on the surface of this mold, properly maintained in rotation, by means of a "Ion Beam Sputtering Deposition" process are deposited:
a releasing film preferably golden;
a multilayer structure with high and low density alternate layers, preferably nickel and carbon, being the multilayer structure generally composed with more than one hundred layers, with constant period or variable "spacins" depending on the optical specification of the mirror;
. a support of the reflecting structure, manufactured so as to fit the mold with a good approximation, is attached with a proper adhesive to the external part of the multilayer structure, being this support metallic, nickel o ceramic, alumina, Al₂O₃, silica SiO₂, or silicon carbide, SiC;
. the mold is cooled by liquid nitrogen which causes its shrinking and detachment from the mirror on which no gold releasing film remains.
